# EUROPEAN PATENT SPECIFICATION

(11) **EP 3 598 612 B1**
(45) Date of publication and mention of the grant of the patent: **27.01.2021**
(21) Application number: 18880048.6
(22) Date of filing: 24.05.2018
(51) Int. Cl.: H02K 3/52, H02K 1/14

(54) **STATOR AND ELECTRIC MOTOR EQUIPPED WITH SAID STATOR**
STATOR UND DAMIT AUSGESTATTETER ELEKTROMOTOR
STATOR ET MOTEUR ÉLECTRIQUE ÉQUIPÉ DUDIT STATOR

(43) Date of publication of application: 22.01.2020
(73) Proprietor: MITSUBISHI ELECTRIC CORPORATION, Chiyoda-ku Tokyo 100-8310 (JP)
(72) Inventor: The designation of the inventor has not yet been filed
(74) Representative: Pfenning, Meinig & Partner mbB
(86) International application number: PCT/JP2018/020002
(87) International publication number: WO 2019/224979

(56) References cited:
- DE-A1-102004 050 646
- JP-A- H10 271 718
- JP-A- 2002 291 191
- JP-A- 2008 167 604
- JP-A- 2012 075 215
- JP-A- 2012 075 215
- JP-A- 2014 128 049
- JP-A- 2014 128 049
- JP-A- 2014 217 105
- US-A1- 2016 072 351

## Description

### Technical Field

The present invention relates to a stator including connecting wires each connecting windings of the same phase, and a motor provided with the stator.

### Background Art

A motor typically includes an annular stator, and a rotor attached to face the inner surface of the stator in such a manner that the rotor is allowed to rotate. The stator includes an annular iron core including a plurality of stacked electromagnetic steel sheets, coils wound on the iron core, and insulators insulating the iron core from the coils. The iron core includes a plurality of split cores having the same shape and split in the circumferential direction. Each split core includes a core back portion extending in the circumferential direction, and a tooth projecting toward the center from the core back portion. The split cores adjacent in the circumferential direction are coupled at joint portions provided in the core back portions in such a manner that the split cores are allowed to rotate.

U-phase windings, V-phase windings, and W-phase windings are formed on the teeth of the stator by winding coils around the teeth. Each of the coils wound for a corresponding one of the phases is continuously wound. For example, after a coil is wound around a U-phase tooth, the coil skips the V-phase split core and the W-phase split core without being cut, and is wired to the next U-phase tooth to be wound around the next U-phase tooth. A coil that connects windings of the same phase while skipping those of different phases is called a connecting wire.

When coils are wound around the teeth, the stator is linearly formed or in a reversed annular shape with the teeth projecting outward by pivoting the split cores, to improve the space factor. Then, after coils are wound around the teeth, the split cores are pivoted in such a manner that the stator is formed in an annular shape with the teeth extending toward the center of the annular shape from the core back portions.

The length of the connecting wire is determined depending on the shape of the stator when coils are wound. Consequently, when the shape of the stator is changed from a linear shape or a reversed annular shape with the teeth projecting outward for winding coils to an annular shape by pivoting the split cores, the connecting wire becomes loose and slack, and is stretched more than necessary and disconnected, due to a change in path.

For example, Patent Literature 1 discloses a stator that prevents a connecting wire of a coil from being disconnected. The stator has V-shaped grooves between adjacent split cores, and is formed in an annular shape by being bent at the vertices of acute angles of the V-shaped grooves as fulcra. In an insulating material of the stator, a plurality of outer peripheral grooves that accommodate connecting wires of coils are formed to be open toward the outer peripheral direction of the stator. The outer peripheral grooves are formed in such shape and size that all the connecting wires of the coils pass substantially over the bending fulcra. Vertical grooves for guiding the terminals of the coils wound around the teeth to the outer peripheral grooves are also formed in the insulating material. The connecting wires pass through the vertical grooves to be accommodated in the outer peripheral grooves. As this stator is configured in such a manner that all the connecting wires of the coils pass substantially over the bending fulcra, it is possible to prevent the connecting wires from becoming slack when the stator is bent into an annular shape after coils are wound on the stator linearly formed.

### Citation List

### Patent Literature

Patent Literature 1: Japanese Unexamined Patent Application Publication No. 11-55883

JP2014217105A provides a low-cost stator for rotary electric machines that can maintain connection quality at a neutral point.

JP2012075215A provides a stator that can easily accommodate the winding terminal of a drive coil wound about a stator core so as not to protrude to the outer side in a radial direction than the circumference of the stator core.

### Summary of Invention

### Technical Problem

The stator disclosed in Patent Literature 1 has the outer peripheral grooves having such shape and size that the connecting wires pass substantially over the bending fulcra. However, the connecting wires are not supported at the bent portions, and are not restricted to pass substantially over the fulcra. Consequently, the path of the connecting wires when the stator is linearly formed may be slightly longer than the path of the connecting wires when the stator is formed in an annular shape. That is, when the stator formed for winding coils is pivoted into the annular shape, the path of the connecting wires is changed, and the connecting wires may become slack.

The present invention has been made to overcome the above problems, and to provide a stator capable of preventing a connecting wire connecting windings of the same phase from becoming slack, and a motor provided with the stator. Solution to Problem

A stator according to each of the independent claims is provided to solve the above mentioned problem. The stator according to an embodiment of the present invention includes an iron core formed by arranging a plurality of split cores in an annular shape and coupling adjacent ones of the plurality of split cores at joint portions, the plurality of split cores being each configured to rotate and each including a core back portion extending in a circumferential direction and a tooth extending toward a center from the core back portion; coils wound around the teeth to form windings; and insulators disposed on axial end faces of the plurality of split cores. Each of the coils has connecting wires each connecting the windings of the same phase. Each of the insulators is provided with a connecting wire holding portion extending axially upward and having grooves extending in the circumferential direction on a radially-outer side surface, and a radially-inner projection and a radially-outer projection provided across a corresponding one of the joint portions. The radially-inner projection and the radially-outer projection are equally spaced from a center of the joint portion. Each of the connecting wires is held in a corresponding one of the grooves of the connecting wire holding portion, and passes between the radially-inner projection and the radially-outer projection.

### Advantageous Effects of Invention

According to an embodiment of the present invention, the radially-inner projection and the radially-outer projection are equally spaced from the center of the joint portion, or the radially-outer projection is located farther from the joint portion than the radially-inner projection is, and each of the connecting wires is held in a corresponding one of the grooves of the connecting wire holding portion, and passes between the radially-inner projection and the radially-outer projection. Consequently, even when the split cores are pivoted into an annular shape after the coils are wound on the stator linearly formed or in a reversed annular shape, it is possible to prevent the connecting wires each connecting the windings of the same phase from becoming slack, and thus to provide the motor with stable performance and high reliability.

### Brief Description of Drawings

[Fig. 1] Fig. 1 is a vertical cross-sectional view illustrating the internal configuration of a compressor including a motor according to Embodiment 1 of the present invention.
[Fig. 2] Fig. 2 is a top view illustrating a stator according to Embodiment 1 of the present invention.
[Fig. 3] Fig. 3 is a perspective view illustrating a split core of the stator according to Embodiment 1 of the present invention.
[Fig. 4] Fig. 4 is a perspective view illustrating the split core of the stator according to Embodiment 1 of the present invention as viewed from a direction different from that in Fig. 3.
[Fig. 5] Fig. 5 is a top view illustrating the stator with lead wires connected to the stator according to Embodiment 1 of the present invention.
[Fig. 6] Fig. 6 is a side view illustrating the stator with the lead wires connected to the stator according to Embodiment 1 of the present invention.
[Fig. 7] Fig. 7 is an explanatory view illustrating a manufacturing process of the stator according to Embodiment 1 of the present invention.
[Fig. 8] Fig. 8 is an explanatory view illustrating the manufacturing process of the stator according to Embodiment 1 of the present invention.
[Fig. 9] Fig. 9 is an explanatory view illustrating the manufacturing process of the stator according to Embodiment 1 of the present invention.
[Fig. 10] Fig. 10 is an explanatory view illustrating the manufacturing process of the stator according to Embodiment 1 of the present invention.
[Fig. 11] Fig. 11 is an explanatory view illustrating the manufacturing process of the stator according to Embodiment 1 of the present invention.
[Fig. 12] Fig. 12 is a plan view illustrating a split core of a stator according to Embodiment 2 of the present invention.
[Fig. 13] Fig. 13 is a plan view illustrating a split core of a stator according to Embodiment 3 of the present invention.
[Fig. 14] Fig. 14 is a perspective view illustrating an insulator of the stator according to Embodiment 3 of the present invention.
[Fig. 15] Fig. 15 is a perspective view illustrating an insulator of a stator according to an example of the present invention.
[Fig. 16] Fig. 16 is an explanatory view illustrating a relationship between the stator and a rotating device according to an example of the present invention.

### Description of Embodiments

Hereinafter, Embodiments of the present invention will be described with reference to the drawings. In the drawings, the same or corresponding parts will be denoted by the same reference signs, and the description of the parts will be simplified or omitted as appropriate. Further, the shape, size, position, and other factors of the structures illustrated in the drawings may be changed as appropriate within the scope of the present invention.

### Embodiment 1

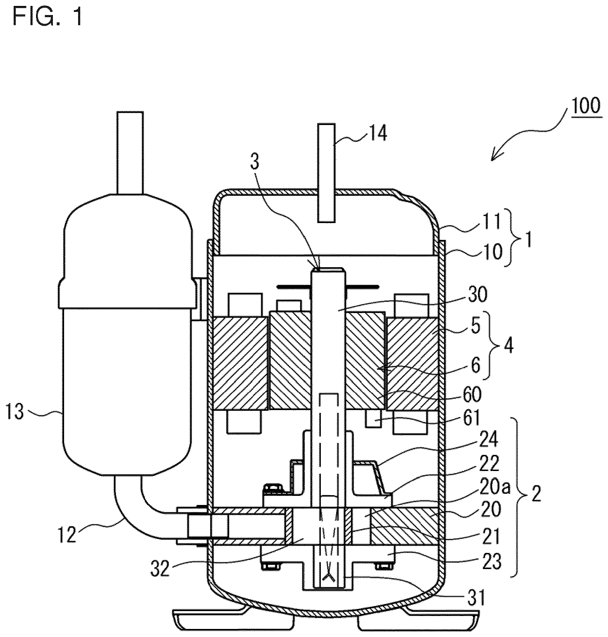

In Embodiment 1, an example in which a motor 4 is mounted in a compressor 100 will be described with reference to Fig. 1. Fig. 1 is a vertical cross-sectional view illustrating the internal configuration of a compressor including a motor according to Embodiment 1 of the present invention. The compressor 100 illustrated in Fig. 1 is a rotary compressor that includes, inside the sealed container 1, a compression mechanism unit 2 that compresses refrigerant gas, and the motor 4 that drives the compression mechanism unit 2.

The sealed container 1 includes a bottomed cylindrical lower container 10, an upper container 11 that covers and seals an upper opening of the lower container 10. In the lower container 10, the compression mechanism unit 2 is installed at the lower part, and the motor 4 is installed at the upper part. The sealed container 1 is connected to a suction muffler 13 via a suction pipe 12 in such a manner that refrigerant gas is introduced into the sealed container 1 from the suction muffler 13. A discharge pipe 14 that allows compressed refrigerant to be discharged is connected to the upper part of the sealed container 1. Further, refrigerating machine oil (not illustrated) is stored at the bottom of the sealed container 1.

As illustrated in Fig. 1, the compression mechanism unit 2 is coupled to the motor 4 by a crankshaft 3. Rotational movement of the motor 4 is transmitted to the compression mechanism unit 2 by the crankshaft 3. The crankshaft 3 includes a main shaft portion 30, a sub shaft portion 31, and an eccentric shaft portion 32 provided between the main shaft portion 30 and the sub shaft portion 31. The crankshaft 3 has an oil suction hole at its shaft center. The crankshaft 3 includes a helical centrifugal pump in the oil suction hole to pump refrigerating machine oil stored at the bottom of the sealed container 1, and supply the refrigerating machine oil to a sliding portion of the compression mechanism unit 2.

As illustrated in Fig. 1, the compression mechanism unit 2 includes a cylinder 20, a rolling piston 21, a main bearing 22, a sub bearing 23, a discharge muffler 24, and vanes (not illustrated).

The cylinder 20 is fixed at its outer peripheral portion to the sealed container 1 by a bolt or other suitable fixing devices. The cylinder 20 includes a cylinder chamber 20a having a circular outer periphery and including a compression chamber and a suction chamber in the cylinder chamber 20a. The suction pipe 12 through which suction gas from a refrigeration cycle passes via the suction muffler 13 is coupled to the cylinder 20. The cylinder chamber 20a is open at both axial ends.

The rolling piston 21 eccentrically rotates in the cylinder chamber 20a. The rolling piston 21 has a ring shape, and its inner periphery fits the eccentric shaft portion 32 of the crankshaft 3 in such a manner that the eccentric shaft portion 32 is allowed to slide. That is, the compression mechanism unit 2 is configured in such a manner that the rolling piston 21 fitting the eccentric shaft portion 32 of the crankshaft 3 is accommodated in the cylinder chamber 20a, and an end of each vane that reciprocates in a groove provided in the cylinder 20 contacts the outer periphery of the rolling piston 21 to form a compression chamber.

The main bearing 22 fits the main shaft portion 30 of the crankshaft 3 in such a manner that the main shaft portion 30 is allowed to slide, and closes one of the openings of the cylinder chamber 20a of the cylinder 20. The discharge muffler 24 is attached to the main bearing 22. High-temperature high-pressure discharged gas that is discharged from a discharge valve of the main bearing 22 flows into the discharge muffler 24, and is discharged from a discharge hole of the discharge muffler 24 into the sealed container 1. The sub bearing 23 fits the sub shaft portion 31 of the crankshaft 3 in such a manner that the sub shaft portion 31 is allowed to slide, and closes the other opening of the cylinder chamber 20a of the cylinder 20.

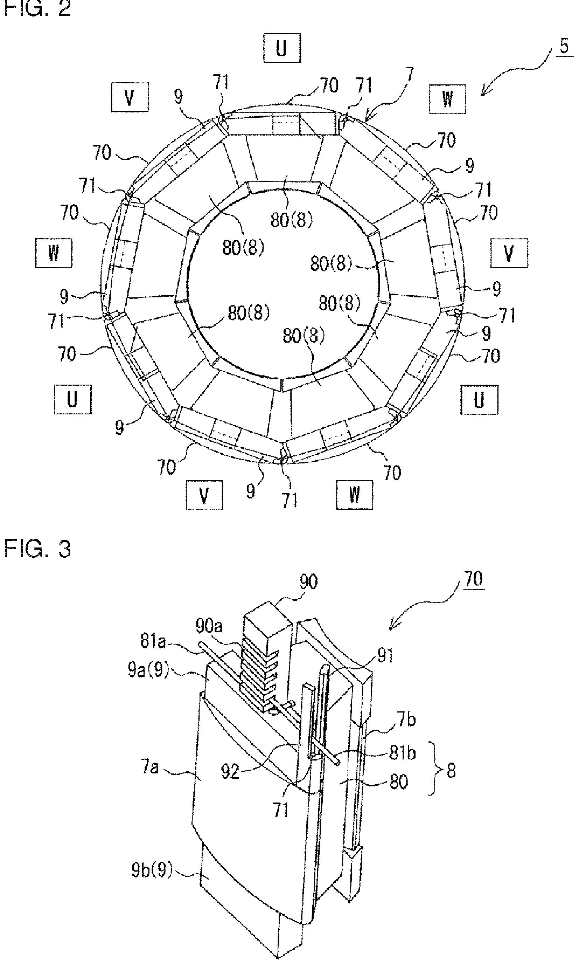

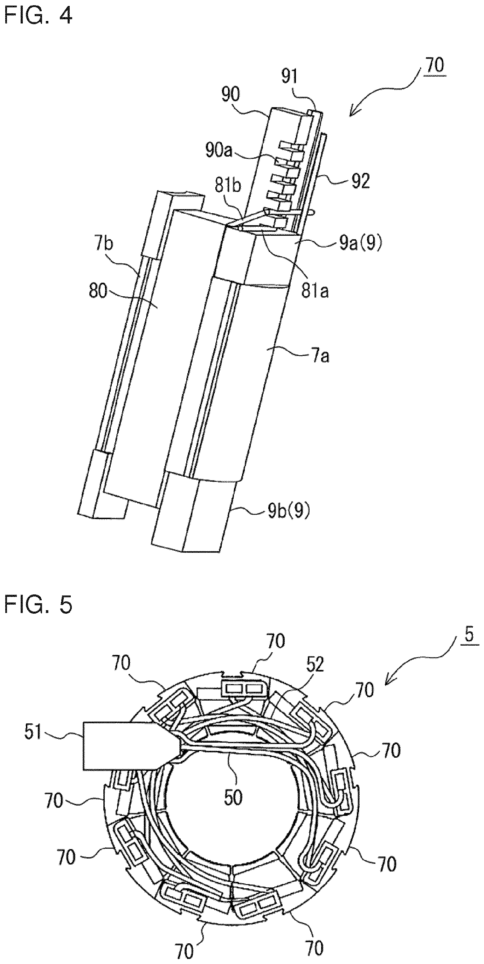

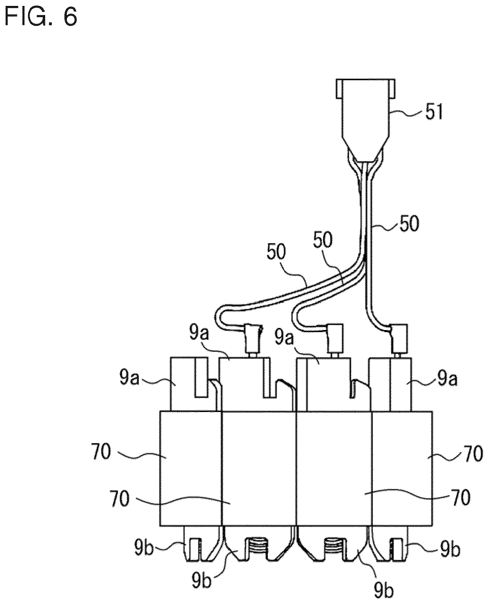

In the following, a motor provided with a stator of Embodiment 1 will be described with reference to Figs. 2 to 6, with reference to Fig. 1 as well. Fig. 2 is a top view illustrating a stator according to Embodiment 1 of the present invention. Fig. 3 is a perspective view illustrating a split core of the stator according to Embodiment 1 of the present invention. Fig. 4 is a perspective view illustrating the split core of the stator according to Embodiment 1 of the present invention as viewed from a direction different from that in Fig. 3. Fig. 5 is a top view illustrating the stator with lead wires connected to the stator according to Embodiment 1 of the present invention. Fig. 6 is a side view illustrating the stator with the lead wires connected to the stator according to Embodiment 1 of the present invention.

As illustrated in Figs. 1 and 2, the motor 4 is a three-phase alternating current motor of U-, V-, and W-phases. The motor 4 includes an annular stator 5 fixed to and supported on an inner wall surface of the sealed container 1 by shrink fitting or other methods, and a rotor 6 disposed to face the inner surface of the stator 5 in such a manner that the rotor 6 is allowed to rotate.

As illustrated in Fig. 1, the rotor 6 includes a rotor core 60 including a plurality of stacked electromagnetic steel sheets punched into a predetermined shape, and permanent magnets 61 inserted into insertion holes provided in the rotor core 60. The main shaft portion 30 of the crankshaft 3 is fitted in the rotor 6. The rotor 6 is rotated by receiving a rotational force from a rotating magnetic field generated by the stator 5.

As illustrated in Figs. 2 to 4, the stator 5 includes an iron core 7, coils 8, and insulators 9. The iron core 7 includes a plurality of stacked electromagnetic steel sheets. The iron core 7 is formed by arranging a plurality of split cores 70 in an annular shape and coupling adjacent split cores 70 at joint portions 71 in such a manner that the split cores 70 are allowed to rotate. Each split core 70 includes a core back portion 7a extending in a circumferential direction and a tooth 7b extending toward the center from the core back portion 7a. The iron core 7 of Fig. 2 includes nine split cores 70. The stator 5 can be changed into various shapes such as a linear shape and a reversed annular shape facing the direction opposite to that of Fig. 2 by pivoting the split cores 70.

Each joint portion 71 is configured in such a manner that, for example, electromagnetic steel sheets of the adjacent split cores 70 overlap each other at the ends of the core back portions 7a and are coupled with a pin inserted in a common pin hole provided at an overlapping part. The adjacent split cores 70 may have indented fitting portions at the ends of the core back portions 7a to be coupled to each other in such a manner that the split cores 70 are allowed to rotate. That is, the split cores 70 may be configured in other manners as long as each of the split cores 70 arranged in the circumferential direction is coupled to its adjacent split core 70 in such a manner that the split core 70 is allowed to rotate.

As illustrated in Fig. 2, the U-phase windings 80, the V-phase windings 80, and the W-phase windings 80 are formed by winding the coils 8 around the teeth 7b of the stator 5. Each of the coils 8 wound for a corresponding one of the phases is continuously wound. For example, after the coil 8 is wound around the U-phase tooth 7b, the coil 8 skips the V-phase split core 70 and the W-phase split core 70 without being cut, and is wired to the next U-phase tooth 7b to be wound around the next U-phase tooth 7b.

The coils 8 are wound around the teeth 7b of the split cores 70 to form windings 80. The coil 8 has connecting wires 81a and 81b each connecting the windings 80 of the same phase while skipping the windings of different phases. The connecting wires 81a and 81b illustrated in Figs. 3 and 4 are the connecting wire 81a that, after being wound around the adjacent U-phase tooth 7b, skips the V-phase split core 70 and the W-phase split core 70 and is wired to the illustrated U-phase split core 70 without being cut, and the connecting wire 81b that, after being wound around the tooth 7b of that split core 70, is wired to the next U-phase split core 70.

As illustrated in Figs. 5 and 6, lead wires 50 for applying a voltage to make a current flow are each connected to a corresponding one of the coils 8. The lead wires 50 are connected to a glass terminal provided on the sealed container 1 via a connecting portion 51, and receive power supplied from outside the sealed container 1. The U-phase, V-phase, and W-phase coils 8 are electrically connected to each other via jumper wires 52. When a current is applied to the coil 8, the stator 5 servers as an electromagnet, and interacts with the permanent magnets 61 provided in the rotor 6 to rotate the rotor 6.

As illustrated in Figs. 3 and 4, each insulator 9 includes an upper insulator 9a provided to a portion close to the upper container 11, and a lower insulator 9b provided to a portion close to the compression mechanism unit 2. The insulator 9 is made of, for example, synthetic resin, and covers both end faces of each of the core back portion 7a and the tooth 7b to insulate the iron core 7 from the coil 8. The upper insulator 9a has a cavity (not illustrated). A mag-mate terminal to which the lead wire 50 used for supplying electricity to the U-phase, V-phase, or W-phase coil 8 is connected is embedded in the cavity.

As illustrated in Figs. 3 and 4, the upper insulator 9a includes a connecting wire holding portion 90 extending axially upward and having a plurality of grooves 90a extending in a circumferential direction on a radially-outer side surface, and a radially-inner projection 91 and a radially-outer projection 92 provided across the joint portion 71. Each of the connecting wires 81a and 81b of the coil 8 is held in a corresponding one of the grooves 90a of the connecting wire holding portion 90, and passes between the radially-inner projection 91 and the radially-outer projection 92.

As illustrated in Figs. 3 and 4, the connecting wire holding portion 90 is disposed in a position corresponding to the core back portion 7a of the stator 5. The connecting wire holding portion 90 has, for example, six grooves 90a arranged in the vertical direction to hold the connecting wires 81a and 81b wired to the U-phase, V-phase, and W-phase split cores 70. The groove width of each groove 90a is about the same as the wire diameter of the coil 8.

The radially-inner projection 91 and the radially-outer projection 92 are pins, for example, and are equally spaced from the center of the joint portion 71. Specifically, the radially-inner projection 91 and the radially-outer projection 92 are spaced apart from each other by a distance corresponding to the wire diameter of the coil 8.

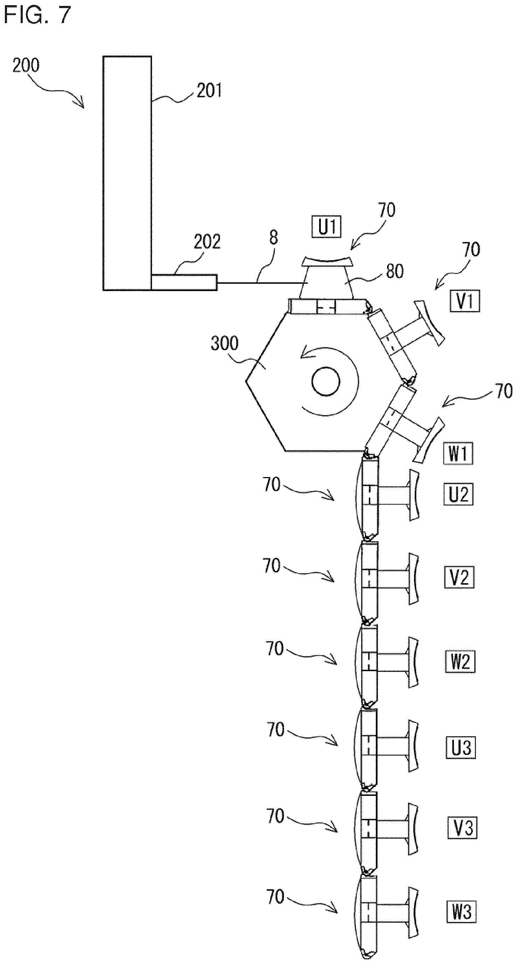

In the following, a method of manufacturing the stator 5 with the above configuration will be described with reference to Figs. 7 to 11. Figs. 7 to 11 are explanatory views illustrating a manufacturing process of the stator according to Embodiment 1 of the present invention. Figs. 7 to 11 illustrate an example in which the coil 8 is wound around the U-phase teeth 7b.

A flyer winding machine 200 is used for winding the coils 8 around the teeth 7b of the stator 5. As illustrated in Fig. 7, the flyer winding machine 200 discharges the coil 8 from a nozzle 202 provided at the distal end of a flyer 201, and winds the coil 8 on the tooth 7b by rotating the flyer 201. The split cores 70 are arranged in a reversed annular shape with the teeth 7b projecting outward and are fixed to a hexagonal rotating part 300. Each of the teeth 7b of a corresponding one of the phases around which the coil 8 is to be wound can be located in front of the flyer 201 by rotating the rotating part 300.

First, as illustrated in Fig. 7, the rotating part 300 is rotated in such a manner that the tooth 7b of U1 is located in front of the flyer 201, and the coil 8 is wound around the tooth 7b of U1. After the winding 80 is formed by winding the coil 8, the positions of the distal end of the flyer 201 and the tooth 7b of U1 are relatively moved by rotating the rotating part 300, and the coil 8 is discharged from the nozzle 202. Thus, the connecting wire 81a is wired in the groove 90a of the connecting wire holding portion 90 and between the radially-inner projection 91 and the radially-outer projection 92 on the split core 70 of U1.

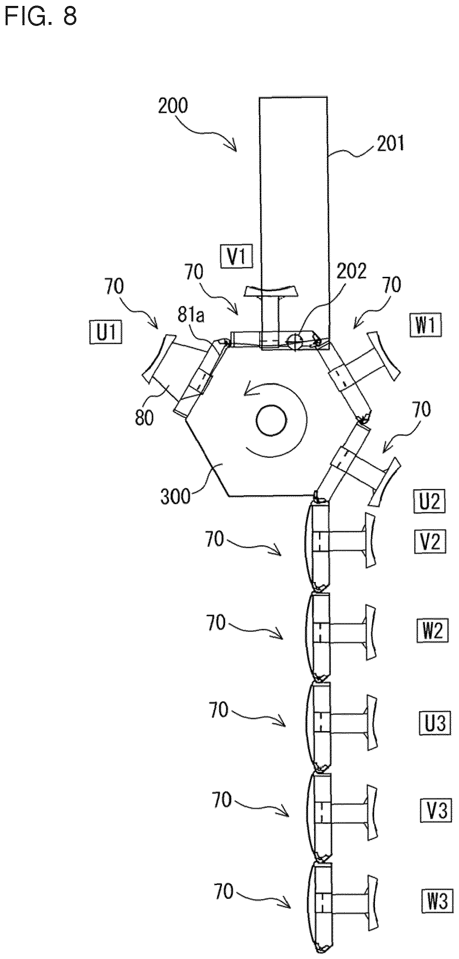

Subsequently, as illustrated in Fig. 8, the positions of the distal end of the flyer 201 and the tooth 7b of V1 are relatively moved by rotating the rotating part 300, and the coil 8 is discharged from the nozzle 202. Thus, the connecting wire 81a is wired in the groove 90a of the connecting wire holding portion 90 and between the radially-inner projection 91 and the radially-outer projection 92 on the split core 70 of V1. In the same manner, the connecting wire 81a is wired in the groove 90a of the connecting wire holding portion 90 and between the radially-inner projection 91 and the radially-outer projection 92 on the split core 70 of W1.

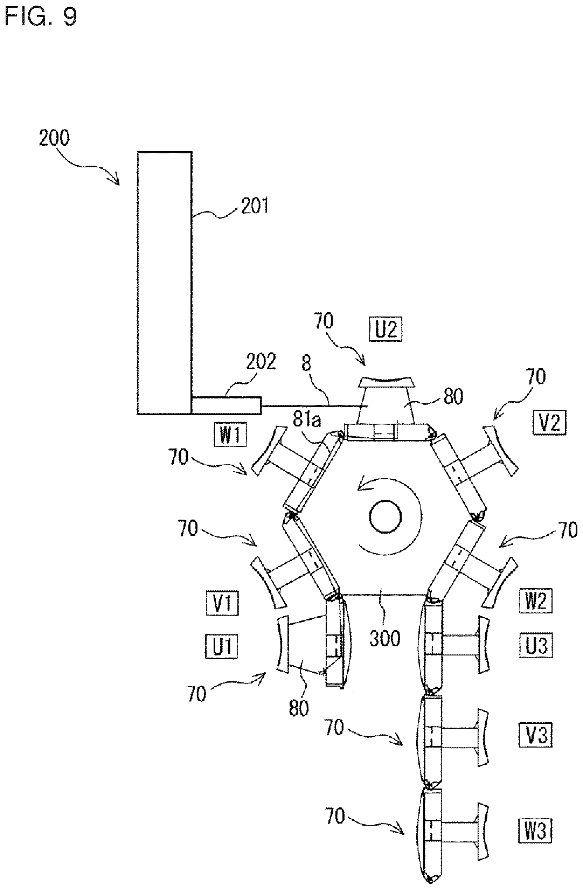

Subsequently, the rotating part 300 is rotated in such a manner that the tooth 7b of U2 is located in front of the flyer 201 as illustrated in Fig. 9, and the connecting wire 81a is wired in the groove 90a of the connecting wire holding portion 90 on the split core 70 of U2 as illustrated in Figs. 3 and 4. Then, the winding 80 is formed by winding the coil 8 around the tooth 7b of U2. The procedure of winding the coil 8 around the tooth 7b of U2 is the same as the procedure of winding the coil 8 around the tooth 7b of U1. After the coil 8 is wound, the positions of the distal end of the flyer 201 and the tooth 7b of U2 are relatively moved by rotating the rotating part 300, and the coil 8 is discharged from the nozzle 202. Thus, as illustrated in Figs. 3 and 4, the connecting wire 81b is wired in the groove 90a of the connecting wire holding portion 90 and between the radially-inner projection 91 and the radially-outer projection 92 on the split core 70 of U2.

Subsequently, the positions of the distal end of the flyer 201 and the tooth 7b of V2 are relatively moved, and the coil 8 is discharged. Thus, the connecting wire 81b is wired in the groove 90a of the connecting wire holding portion 90 and between the radially-inner projection 91 and the radially-outer projection 92 on the split core 70 of V2. In the same manner, the connecting wire 81b is wired in the groove 90a of the connecting wire holding portion 90 and between the radially-inner projection 91 and the radially-outer projection 92 on the split core 70 of W2.

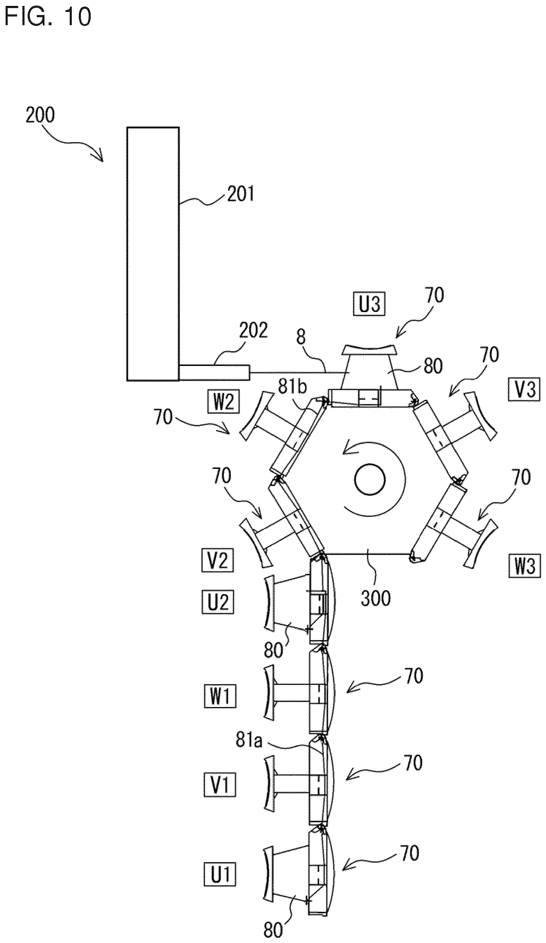

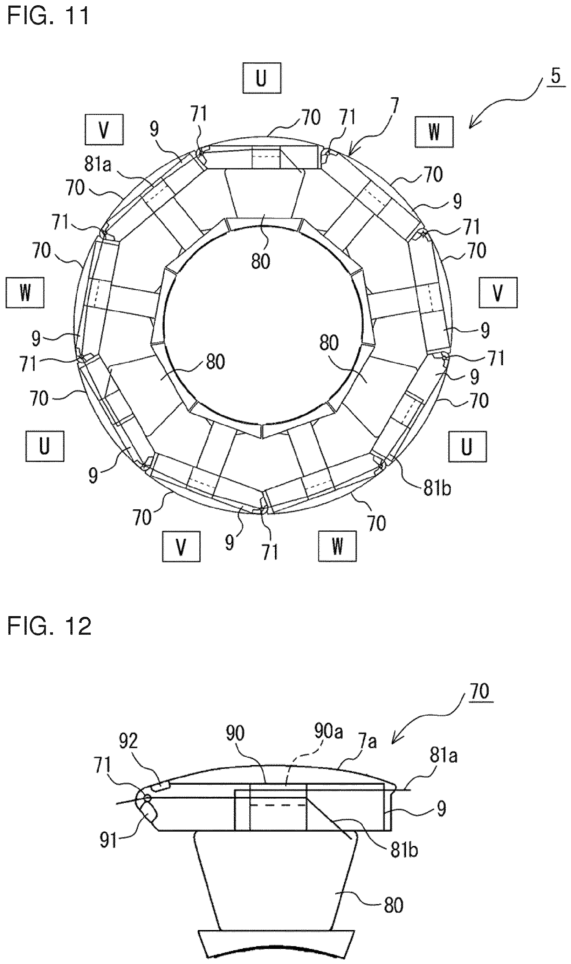

Subsequently, as illustrated in Fig. 10, the rotating part 300 is rotated in such a manner that the tooth 7b of U3 is located in front of the flyer 201, and the coil 8 is wound around the tooth 7b of U3 to form the winding 80. The procedure of winding the coil 8 around the tooth 7b of U3 is the same as the procedure of winding the coil 8 around the tooth of U1. With these steps, as illustrated in Fig. 11, formation of the windings 80 and wiring of the connecting wires 81a and 81b in U-phase are completed. Subsequently, by following the same steps as those for U-phase, formation of the windings 80 and wiring of the connecting wires 81a and 81b are performed in V-phase and W-phase. Note that the method of manufacturing the stator 5 described above is merely an example, and other manufacturing methods may be used. For example, when a winding machine has three flyers 201, the process of forming the windings 80 and wiring the connecting wires 81a and 81b can be performed simultaneously in all the phases.

As described above, in the stator 5 of Embodiment 1, each insulator 9 is provided with, at its end face, the connecting wire holding portion 90 extending axially upward and having the grooves 90a extending in the circumferential direction on the radially-outer side surface, and the radially-inner projection 91 and the radially-outer projection 92 provided across the joint portion 71. Further, the radially-inner projection 91 and the radially-outer projection 92 are equally spaced from the center of the joint portion 71. Specifically, the radially-inner projection 91 and the radially-outer projection 92 are spaced apart from each other by a distance corresponding to the wire diameter of the coil 8. Each of the connecting wires 81a and 81b is held in a corresponding one of the grooves 90a of the connecting wire holding portion 90, and passes between the radially-inner projection 91 and the radially-outer projection 92.

That is, in the stator 5 of Embodiment 1, even when the split cores 70 are pivoted into an annular shape after the coils 8 are wound on the split cores 70 linearly formed in series or in a reversed annular shape, the path of the connecting wires 81a and 81b is not changed. Consequently, it is possible to prevent the connecting wires 81a and 81b each connecting the windings 80 of the same phase from becoming slack or being disconnected, and thus to provide the motor 4 with stable performance and high reliability.

The stator 5 of Embodiment 1 does not have to be configured in such a manner that the radially-inner projection 91 and the radially-outer projection 92 are spaced apart from each other by a distance corresponding to the wire diameter of the coil 8. As long as the radially-inner projection 91 and the radially-outer projection 92 are equally spaced from the center of the joint portion 71, the radially-inner projection 91 and the radially-outer projection 92 may be spaced apart from each other by a distance corresponding to the wire diameter of the coil 8 or greater. In this case, the stator 5 may have the radially-inner projection 91 and the radially-outer projection 92 at positions not interfering with other parts of the motor 4, and consequently the degree of freedom in designing the insulator 9 can be improved.

### Embodiment 2

In the following, a stator 5 according to Embodiment 2 of the present invention will be described with reference to Fig. 12. Fig. 12 is a plan view illustrating a split core of a stator according to Embodiment 2 of the present invention. In Embodiment 2, only the elements different from those of Embodiment 1 will be described. The same elements as those of the stator of Embodiment 1 will be denoted by the same reference signs, and the description of the elements will be omitted as appropriate.

As illustrated in Figs. 3 and 4, an insulator 9 of the stator 5 of Embodiment 2 also includes a connecting wire holding portion 90 extending upward and having a plurality of grooves 90a extending in a circumferential direction on a radially-outer side surface, and a radially-inner projection 91 and a radially-outer projection 92 provided across the joint portion 71.

As illustrated in Fig. 12, the radially-outer projection 92 of Embodiment 2 is located farther from the joint portion 71 than the radially-inner projection 91 is. The connecting wire 81b is held in a corresponding one of the grooves 90a of the connecting wire holding portion 90, and passes between the radially-inner projection 91 and the radially-outer projection 92.

That is, when the stator 5 of Embodiment 2 is formed in a reversed annular shape by pivoting the split cores 70, the path of the connecting wires 81a and 81b can be made shorter than when the stator 5 is formed in an annular shape. Consequently, when the stator 5 of Embodiment 2 is formed in an annular shape by pivoting the split cores 70 after winding the coils 8 on the stator 5 formed in a reversed annular shape to form the windings 80 and wiring the connecting wires 81a and 81b, the connecting wires 81a and 81b can be stretched and pulled tight due to the shorter path. Consequently, the rigidity and the performance of holding the positions of the connecting wires 81a and 81b can be improved.

### Embodiment 3

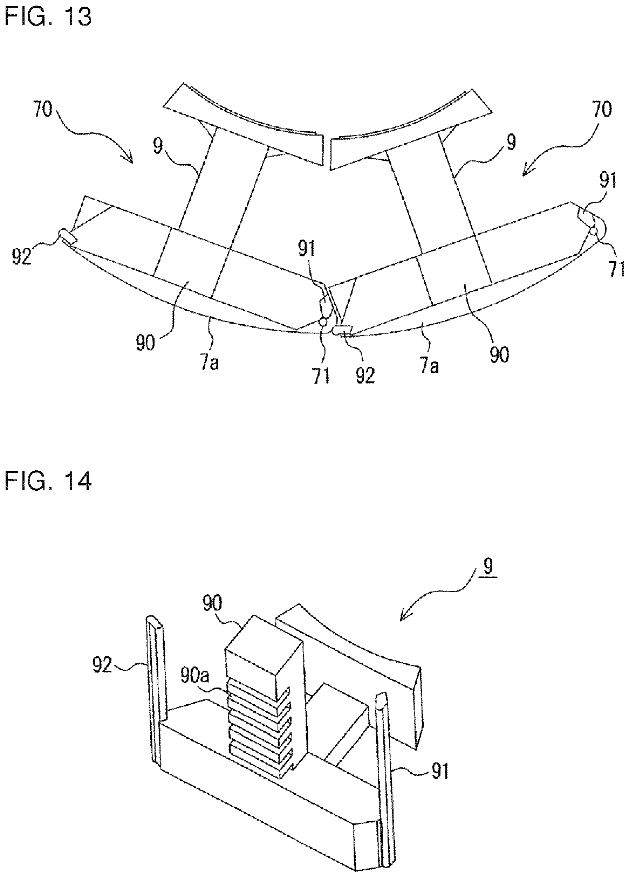

In the following, a stator 5 according to Embodiment 3 of the present invention will be described with reference to Figs. 13 and 14. Fig. 13 is a plan view illustrating a split core of a stator according to Embodiment 3 of the present invention. Fig. 14 is a perspective view illustrating an insulator of the stator according to Embodiment 3 of the present invention. In Embodiment 3, only the elements different from those of Embodiments 1 and 2 will be described. The same elements as those of the stator of Embodiment 1 will be denoted by the same reference signs, and the description of the elements will be omitted as appropriate.

As illustrated in Figs. 13 and 14, an insulator 9 of the stator 5 of Embodiment 3 also includes a connecting wire holding portion 90 extending upward and having a plurality of grooves 90a extending in a circumferential direction on a radially-outer side surface, and a radially-inner projection 91 and a radially-outer projection 92 provided across the joint portion 71.

In the stator 5 of Embodiment 3, one of the radially-inner projection 91 and the radially-outer projection 92 is disposed on one of adjacent split cores 70, and the other one of the radially-inner projection 91 and the radially-outer projection 92 is disposed on the other one of the adjacent split cores 70. Specifically, each insulator 9 is provided with the radially-inner projection 91 at one circumferential end of the core back portion 7a, and the radially-outer projection 92 at the other circumferential end of the core back portion 7a. As illustrated in Fig. 13, the radially-outer projection 92 is located farther from the joint portion 71 than the radially-inner projection 91 is. Each of the connecting wires 81a and 81b is held in a corresponding one of the grooves 90a of the connecting wire holding portion 90, and passes between the radially-inner projection 91 and the radially-outer projection 92. While not illustrated, the radially-inner projection 91 and the radially-outer projection 92 may be equally spaced from the center of the joint portion 71.

In the stator 5 of Embodiment 3, the radially-inner projection 91 and the radially-outer projection 92 can be disposed at positions not interfering with other parts of the motor 4, and consequently the degree of freedom in designing the insulator 9 can be improved.

### Example

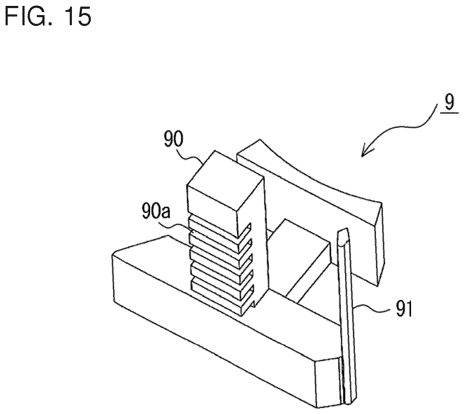

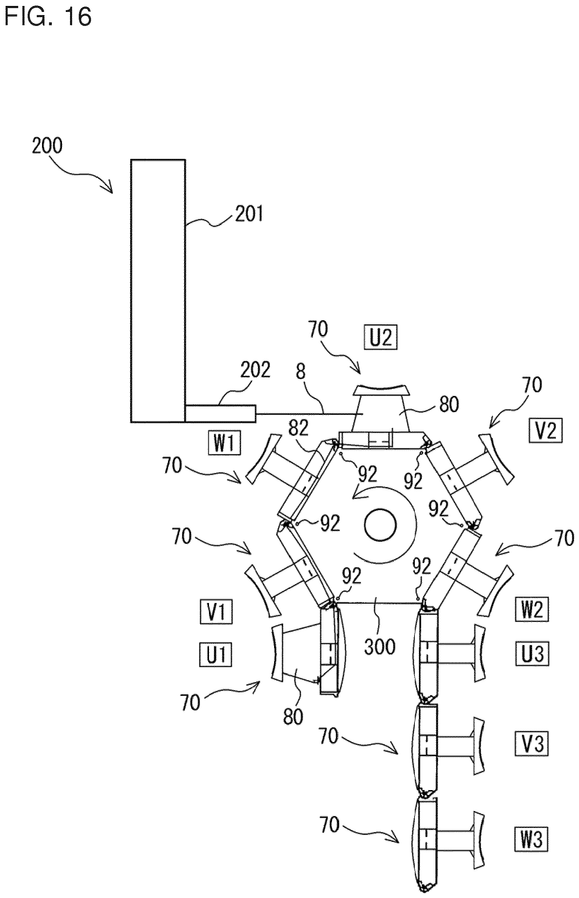

In the following, a stator according to an example of the present invention will be described with reference to Figs. 15 and 16. Fig. 15 is a perspective view illustrating an insulator of a stator according to an example of the present invention. Fig. 16 is an explanatory view illustrating a relationship between the stator and a rotating device according to an example of the present invention. In the example only the elements different from those of Embodiments 1 and 2 will be described. The same elements as those of the stators of Embodiments 1 and 2 will be denoted by the same reference signs, and the description of the elements will be omitted as appropriate.

As illustrated in Fig. 15, an insulator 9 of a stator 5 of the example includes a connecting wire holding portion 90 extending upward and having a plurality of grooves 90a extending in a circumferential direction on a radially-outer side surface, and a radially-inner projection 91 disposed further radially inner than the joint portion 71. As illustrated in Fig. 16, radially-outer projections 92 are disposed on the rotating part 300. Each radially-outer projection 92 is disposed in a position corresponding to the radially-inner projection 91 on the corresponding split core 70, and is located farther from the joint portion 71 than the radially-inner projection 91 is. While not illustrated, the radially-inner projection 91 and the radially-outer projection 92 may be equally spaced from the center of the joint portion 71.

The stator 5 of the example is configured in such a manner that the insulator 9 does not have the radially-outer projection 92, and the radially-inner projection 91 can be disposed at a position not interfering with other parts of the motor 4. Consequently, the degree of freedom in designing the insulator 9 can be improved.

While the present invention has been described with reference to Embodiments, the prevent invention is not limited to Embodiments described above. For example, the illustrated number and shapes of split cores 70 are merely examples and the number and shapes of split cores 70 are not limited to the examples. The radially-inner projection 91 and the radially-outer projection 92 are not limited to the illustrated pins, and may be protrusions formed on the upper surface of the insulator 9. That is, the present invention encompasses design changes and various applications that one skilled in the art would ordinarily make without departing from the scope of the present invention, which is defined by the appended claims.

### Reference Signs List

1 sealed container 2 compression mechanism unit 3 crankshaft 4 motor 5 stator 6 rotor 7 iron core 7a core back portion 7b tooth 8 coil 9 insulator 9a upper insulator 9b lower insulator 10 lower container 11 upper container 12 suction pipe 13 suction muffler 14 discharge pipe 20 cylinder 20a cylinder chamber 21 rolling piston 22 main bearing 23 sub bearing 24 discharge muffler 30 main shaft portion 31 sub shaft portion 32 eccentric shaft portion 50 lead wire 51 connecting portion 52 jumper wire 60 rotor core 61 permanent magnet 70 split core 71 joint portion 80 winding 81a, 81b connecting wire 90 connecting wire holding portion 90a groove 91 radially-inner projection 92 radially-outer projection 100 compressor 200 winding machine 201 flyer 202 nozzle 300 rotating part

## Claims

1. A stator (5), comprising:
an iron core (7) formed by arranging a plurality of split cores (70) in an annular shape and coupling adjacent ones of the plurality of split cores (70) at joint portions (71) in such a manner that each of the plurality of split cores (70) is allowed to rotate and each including a core back portion (7a) extending in a circumferential direction and a tooth (7b) extending toward a center from the core back portion (7a);
coils (8) wound around the teeth (7b) to form windings (80); and
insulators (9) disposed on axial end faces of the plurality of split cores (70),
the windings (80) being repeatedly arranged by a set of different phases in a circumferential direction, the windings (80) being arranged in order of the different phases,
each of the coils (8) having connecting wires (81a, 81b) each connecting the windings (80) of a same phase,
each of the insulators (9) being provided with a connecting wire holding portion (90) extending axially away from the split cores (70) and having grooves (90a) extending in the circumferential direction and formed to be open toward an outer peripheral direction of the stator, and a radially-inner projection (91) and a radially-outer projection (92) provided across a corresponding one of the joint portions (71),
the radially-inner projection (91) and the radially-outer projection (92) being equally spaced from a center of the joint portion (71),
each of the connecting wires (81a, 81b) being held in a corresponding one of the grooves (90a) of the connecting wire holding portion (90), and passing between the radially-inner projection (91) and the radially-outer projection (92).

2. A stator (5), comprising:
an iron core (7) formed by arranging a plurality of split cores (70) in an annular shape and coupling adjacent ones of the plurality of split cores (70) at joint portions (71) in such a manner that each of the plurality of split cores (70) is allowed to rotate and each including a core back portion (7a) extending in a circumferential direction and a tooth (7b) extending toward a center from the core back portion (7a);
coils (8) wound around the teeth (7b) to form windings (80); and
insulators (9) disposed on axial end faces of the plurality of split cores (70),
each of the coils (8) having connecting wires (81a, 81b) each connecting the windings (80) of a same phase,
each of the insulators (9) being provided with a connecting wire holding portion (90) extending axially away from the split cores (70) and having grooves (90a) extending in the circumferential direction and formed to be open toward an outer peripheral direction of the stator, and a radially-inner projection (91) and a radially-outer projection (92) provided across a corresponding one of the joint portions (71),
the radially-outer projection (92) being located farther from the joint portion (71) than the radially-inner projection (91) is,
each of the connecting wires (81a, 81b) being held in a corresponding one of the grooves (90a) of the connecting wire holding portion (90), and passing between the radially-inner projection (91) and the radially-outer projection (92).

3. The stator (5) of claim 1, wherein the radially-inner projection (91) and the radially-outer projection (92) are spaced apart from each other by a distance equal to a wire diameter of the coils (8).

4. A motor (4), comprising:
the stator (5) of any one of claims 1 to 3 and
a rotor (6) disposed inside the stator (5), the rotor (6) being configured to rotate.

## Patentansprüche

1. Stator (5), umfassend:
einen Eisenkern (7), der gebildet ist durch Anordnen einer Vielzahl von geteilten Kernen (70) in einer Ringform und Koppeln von benachbarten der Vielzahl von geteilten Kernen (70) an Zusammenfügungsabschnitten (71) in einer solchen Weise, dass sich jeder der Vielzahl von geteilten Kernen (70) drehen kann, und jeder einen Kernrückenabschnitt (7a), der sich in einer Umfangsrichtung erstreckt, und einen Zahn (7b), der sich von dem Kernrückenabschnitt (7a) zu einem Zentrum hin erstreckt, aufweist;
Spulen (8), die um die Zähne (7b) gewickelt sind, um Wicklungen (80) zu bilden; und
Isolatoren (9), die an axialen Endflächen der Vielzahl von geteilten Kernen (70) angeordnet sind,
wobei die Wicklungen (80) durch eine Menge von unterschiedlichen Phasen in einer Umfangsrichtung wiederholt angeordnet sind, wobei die Wicklungen (80) in der Reihenfolge der unterschiedlichen Phasen angeordnet sind,
wobei jede der Spulen (8) Verbindungsdrähte (81a, 81b) aufweist, die jeweils die Wicklungen (80) einer gleichen Phase verbinden,
wobei jeder der Isolatoren (9) mit einem Verbindungsdrahthalteabschnitt (90) versehen ist, der sich axial von den geteilten Kernen (70) weg erstreckt und Nuten (90a) aufweist, die sich in der Umfangsrichtung erstrecken und ausgebildet sind, um zu einer äußeren peripheren Richtung des Stators hin offen zu sein, und ein radial-innerer Vorsprung (91) und ein radial-äußerer Vorsprung (92) über einen entsprechenden der Zusammenfügungsabschnitte (71) vorgesehen sind,
wobei der radial-innere Vorsprung (91) und der radial-äußere Vorsprung (92) von einem Zentrum des Zusammenfügungsabschnitts (71) gleichmäßig beabstandet sind,
jeder der Verbindungsdrähte (81a, 81b) in einer entsprechenden der Nuten (90a) des Verbindungsdrahthalteabschnitts (90) gehalten ist und zwischen dem radial-inneren Vorsprung (91) und dem radial-äußeren Vorsprung (92) verläuft.

2. Stator (5), umfassend:
einen Eisenkern (7), der gebildet ist durch Anordnen einer Vielzahl von geteilten Kernen (70) in einer Ringform und Koppeln von benachbarten der Vielzahl von geteilten Kernen (70) an Zusammenfügungsabschnitten (71) in einer solchen Weise, dass sich jeder der Vielzahl von geteilten Kernen (70) drehen kann, und jeder einen Kernrückenabschnitt (7a), der sich in einer Umfangsrichtung erstreckt, und einen Zahn (7b), der sich von dem Kernrückenabschnitt (7a) zu einem Zentrum hin erstreckt, aufweist;
Spulen (8), die um die Zähne (7b) gewickelt sind, um Wicklungen (80) zu bilden; und
Isolatoren (9), die an axialen Endflächen der Vielzahl von geteilten Kernen (70) angeordnet sind,
wobei jede der Spulen (8) Verbindungsdrähte (81a, 81b) aufweist, die jeweils die Wicklungen (80) einer gleichen Phase verbinden,
wobei jeder der Isolatoren (9) mit einem Verbindungsdrahthalteabschnitt (90) versehen ist, der sich axial von den geteilten Kernen (70) weg erstreckt und Nuten (90a) aufweist, die sich in der Umfangsrichtung erstrecken und ausgebildet sind, um zu einer äußeren peripheren Richtung des Stators hin offen zu sein, und ein radial-innerer Vorsprung (91) und ein radial-äußerer Vorsprung (92) über einen entsprechenden der Zusammenfügungsabschnitte (71) vorgesehen sind,
wobei der radial-äußere Vorsprung (92) weiter von dem Zusammenfügungsabschnitt (71) entfernt angeordnet ist als der radial-innere Vorsprung (91),
jeder der Verbindungsdrähte (81a, 81b) in einer entsprechenden der Nuten (90a) des Verbindungsdrahthalteabschnitts (90) gehalten ist und zwischen dem radial-inneren Vorsprung (91) und dem radial-äußeren Vorsprung (92) verläuft.

3. Stator (5) nach Anspruch 1, wobei der radial-innere Vorsprung (91) und der radial-äußere Vorsprung (92) um einen Abstand gleich einem Drahtdurchmesser der Spulen (8) voneinander beabstandet sind.

4. Motor (4), umfassend:
den Stator (5) eines der Ansprüche 1 bis 3 und einen Rotor (6), der im Inneren des Stators (5) angeordnet ist, wobei der Rotor (6) eingerichtet ist, sich zu drehen.

## Revendications

1. Stator (5) comprenant :
un noyau en fer (7) formé en agençant une pluralité de noyaux fendus (70) dans une forme annulaire et en couplant les noyaux adjacents de la pluralité de noyaux fendus (70) au niveau des parties de joint (71) de sorte que chacun de la pluralité de noyaux fendus (70) est autorisé à tourner et comprenant chacun une partie arrière de noyau (7a) s'étendant dans une direction circonférentielle et une dent (7b) s'étendant vers un centre à partir de la partie arrière de noyau (7a) ;
des bobines (8) enroulées autour des dents (7b) afin de former des enroulements (80) ; et
des isolateurs (9) disposés sur des faces d'extrémité axiales de la pluralité de noyaux fendus (70),
les enroulements (80) étant agencés, de manière répétée, par un ensemble de phases différentes dans une direction circonférentielle, les enroulements (80) étant agencés dans l'ordre des différentes phases,
chacune des bobines (8) ayant des fils de raccordement (81a, 81b) raccordant chacun les enroulements (80) d'une même phase,
chacun des isolateurs (9) étant prévu avec une partie de support de fil de raccordement (90) s'étendant de manière axiale à distance des noyaux fendus (70) et ayant des rainures (90a) s'étendant dans la direction circonférentielle et formées pour être ouvertes vers une direction périphérique externe du stator, et une saillie radialement interne (91) et une saillie radialement externe (92) prévues de part et d'autre d'une partie correspondante des parties de joint (71),
la saillie radialement interne (91) et la saillie radialement externe (92) étant espacées à égale distance d'un centre de la partie de joint (71),
chacun des fils de raccordement (81a, 81b) étant maintenu dans une rainure correspondante des rainures (90a) de la partie de support de fil de raccordement (90) et passant entre la saillie radialement interne (91) et la saillie radialement externe (92).

2. Stator (5) comprenant :
un noyau en fer (7) formé en agençant une pluralité de noyaux fendus (70) dans une forme annulaire et en couplant les noyaux adjacents de la pluralité de noyaux fendus (70) au niveau des parties de joint (71) de sorte que chacun de la pluralité de noyaux fendus (70) est autorisé à tourner et comprenant chacun une partie arrière de noyau (7a) s'étendant dans une direction circonférentielle et une dent (7b) s'étendant vers un centre à partir de la partie arrière de noyau (7a) ;
des bobines (8) enroulées autour des dents (7b) afin de former des enroulements (80) ; et
des isolateurs (9) disposés sur des faces d'extrémité axiales de la pluralité de noyaux fendus (70),
chacune des bobines (8) ayant des fils de raccordement (81a, 81b) raccordant chacun les enroulements (80) d'une même phase,
chacun des isolateurs (9) étant prévu avec une partie de support de fil de raccordement (90) s'étendant axialement à distance des noyaux fendus (70) et ayant des rainures (90a) s'étendant dans la direction circonférentielle et formées pour être ouvertes vers une direction périphérique externe du stator, et une saillie radialement interne (91) et une saillie radialement externe (92) prévues de part et d'autre d'une partie correspondante des parties de joint (71),
la saillie radialement externe (92) étant positionnée plus à distance de la partie de joint (71) que ne l'est la saillie radialement interne (91),
chacun des fils de raccordement (81a, 81b) étant maintenu dans une rainure correspondante des rainures (90a) de la partie de support de fil de raccordement (90) et passant entre la saillie radialement interne (91) et la saillie radialement externe (92).

3. Stator (5) selon la revendication 1, dans lequel la saillie radialement interne (91) et la saillie radialement externe (92) sont espacées l'une de l'autre par une distance égale à un diamètre de fil des bobines (8).

4. Moteur (4) comprenant :
le stator (5) selon l'une quelconque des revendications 1 à 3, et un rotor (6) disposé à l'intérieur du stator (5), le rotor (6) étant configuré pour tourner.
